# FASCICULE DE BREVET EUROPEEN

(11) **EP 0 726 289 B1**
(45) Date de publication et mention de la délivrance du brevet: **07.11.2001**
(21) Numéro de dépôt: 96200116.0
(22) Date de dépôt: 18.01.1996
(51) Int. Cl.: C08K 5/00, C08K 5/3435, C08F 291/02

(54) **Stabilisation d'un polymère par un radical libre stable**
Polymerstabilisation durch einen stabilen freien Radikal
Polymer stabilisation by stable free radical

(30) Priorité: 07.02.1995 FR 9501380; 13.06.1995 FR 9506967
(43) Date de publication de la demande: 14.08.1996
(73) Titulaire: Atofina, 92800 Puteaux (FR)
(72) Inventeur: Nicol, Pascal, F-64000 Pau (FR); Plechot, Muriel, F-64300 Orthez (FR)

(56) Documents cités:
- EP-A- 0 499 581
- EP-A- 0 512 951
- EP-A- 0 641 822
- WO-A-85/01508
- DD-A- 294 493
- DE-A- 3 917 437
- FR-A- 2 333 813
- US-A- 3 880 822
- US-A- 4 123 418
- JOURNAL OF APPLIED CHEMISTRY OF THE USSR, vol. 52, no. 9, 10 Mars 1980, pages 1948-1951, XP002004053 KIRILLOVA ET AL.: "Stabilization of high-impact Polystyrene"

## Description

La présente invention concerne la stabilisation d'un polymère par un radical libre stable et en particulier l'utilisation d'un radical libre stable pour inhiber la dégradation d'un polymère par un mécanisme ne faisant pas intervenir l'oxygène. Cette utilisation peut être réalisée lorsque le polymère est en présence ou en absence d'oxygène et/ou de lumière.

Le brevet US 5,322,912 enseigne qu'un radical libre stable peut être mélangé à du styrène entre 100 et 160° C de façon à diminuer la masse moléculaire et la distribution de la masse moléculaire du polystyrène finalement synthétisé.

L'article publié dans "Journal of Applied Chemistry of the USSR, vol. 52, N° 9, pp 1948-1951 (10 mars 1980), enseigne qu'un piperidinoxyl radical peut inhiber l'oxydation du polybutadiène contenu dans un polystyrène choc entre 60 et 160° C.

La demanderesse a maintenant découvert qu'un radical libre stable pouvait être utilisé pour stabiliser la masse moléculaire d'un polymère, indépendamment de la présence ou non d'oxygène et/ou de lumière dans son environnement.

Le chauffage d'un polymère peut entraîner des modifications de sa structure comme par exemple sa réticulation ou sa dépolymérisation. Ces réactions peuvent être jugées indésirables car pouvant entraîner une altération ou une modification difficilement contrôlable de la structure et de la masse moléculaire du polymère ce qui peut entraîner une perte de certaines propriétés. Ces réactions peuvent intervenir par un mécanisme ne faisant pas intervenir l'oxygène ni la lumière.

On peut souhaiter éviter la réticulation d'un polymère, par exemple lorsqu'on souhaite le chauffer pour greffer sur ses chaînes une espèce chimique. Un polymère apparait plus réticulé lorsqu'il est plus difficilement soluble dans les solvants organiques tels que les aromatiques (éthylbenzène, toluène, ...) ou les hydrocarbures aliphatiques ou alicycliques (hexane, cyclohexane, ....).

On peut souhaiter éviter la dépolymérisation d'un polymère, par exemple lorsqu'on doit le transformer à chaud pour réaliser un matériau ou une pièce. En effet, la dépolymérisation est susceptible de modifier les propriétés du matériau final. De plus, le monomère généré par la dépolymérisation peut être toxique ce qui peut être très gênant par exemple si l'on destine le matériau à l'industrie alimentaire. Certains monomères sont très toxiques alors que le polymère qui en dérive ne l'est pas. Par exemple, le styrène est toxique alors que le polystyrène ne l'est pas. Autre exemple, le chlorure de vinyle monomère est toxique alors que le polychlorure de vinyle ne l'est pas.

La présence d'un radical-libre stable dans une composition comprenant un polymère permet de résoudre les problèmes sus-mentionnés et de limiter la dépolymérisation ou réticulation de ce polymère sous l'effet de la chaleur. La nature du problème, c'est-à-dire réticulation et/ou dépolymérisation, dépend de la nature du polymère et de la température à laquelle il est destiné à être exposé. Bien entendu, dans le cadre de la présente invention, le terme polymère englobe les copolymères.

Le polymère peut ne pas comprendre de double liaison carbone-carbone. Dans le cadre de la présente invention, le milieu comprenant le radical libre stable peut ne pas comprendre de polymère comprenant une double liaison carbone-carbone.

Le polymère à stabiliser peut ne pas être un polyphénylène éther. Le milieu comprenant le radical libre stable peut donc ne pas comprendre une telle résine.

Il n'est pas nécessaire qu'un co-stabilisant tel que l'un de ceux cités en ingrédient (b) dans la composition du brevet US 4,123,418 (dont le contenu est indu par référence), soit présent avec le radical libre stable.

L'utilisation selon l'invention peut être réalisée a toute pression et par exemple à une pression inférieure à 1.10⁷ Pa (100 bars).

Le tableau ci-dessous énumère de façon non exhaustive en fonction de la nature du polymère, la nature du problème et le domaine de température dans lequel ce problème se pose.

**TABLEAU 1**

| **POLYMERE** | **PROBLEME** | **DOMAINE de TEMPERATURE** |
|---|---|---|
| vinylaromatique | dépolymérisation | 180 à 300° C |
| polyoléfine | dépolymérisation et réticulation | 180 à 300° C |
| polydiène | réticulation | 80 à 150° C |
| acrylique | dépolymérisation | 160 à 300° C |
| méthacrylique | dépolymérisation | 160 à 300° C |

Par polymère vinylaromatique, on entend le polymère ou copolymère issu de la polymérisation ou copolymérisation d'au moins un monomère vinylaromatique. Par monomère vinylaromatique, on entend le styrène, le styrène substitué sur le groupement vinyl par un groupement alkyl tel que l'alpha-méthylstyrène ou l'orthovinyltolùène, le para-vinyltoluène, l'ortho-éthylstyrène, le 2-4-diméthylstyrène, le styrène substitué sur le cycle par un halogène comme par exemple 2-4-dichlorostyrène ainsi que le vinylanthracène.

Le polymère vinylaromatique peut également être un copolymère provenant de la copolymérisation d'au moins un monomère vinylaromatique et d'au moins un monomère choisi parmi l'acrylonitrile, le méthacrylonitrile, l'acide acrylique, l'acide méthacrylique, un ester d'alkyle dont le groupement alkyle contient de 1 à 4 atomes de carbone, un N-alkylmaléimide dont le groupement alkyle contient de 1 à 4 atomes de carbone, le N-phénylmaléimide.

Par polyoléfine, on entend un polymère ou copolymère issu de la polymérisation ou copolymérisation d'au moins une oléfine.

Par oléfine, on entend celles contenant de deux à vingt atomes de carbone et en particulier les alpha-oléfines de ce groupe. Comme oléfine, on peut citer l'éthylène, le propylène, le 1-butène, le 4-méthyl-1-pentène, le 1-octène, le 1-hexène, le 3-méthyl-1-pentène, le 3-méthyl-1-butène, le 1-décène, le 1-tétradécène, ou leurs mélanges. La polyoléfine peut également être un copolymère provenant de la copolymérisation d'au moins une oléfine et d'au moins un monomère choisi parmi les esters vinyliques tels que l'acétate de vinyle ou le propionate de vinyle, l'acide acrylique, les esters acryliques ou alkyacryliques tels que l'acrylate de méthyle ou le méthacrylate de méthyle.

Par polydiène, on entend un polymère ou copolymère issu de la polymérisation ou copolymérisation d'au moins un diène et en particulier un diène conjugué.

Par diène conjugué, on entend de préférence un diène conjugué comprenant de 4 à 8 atomes de carbone tel que le 1,3-butadiène, l'isoprène, le 2,3-diméthyl-1,3-butadiène, le piperylène.

Par polymère acrylique et méthacrylique, on entend un polymère ou copolymère issu de la polymérisation ou copolymérisation respectivement d'au moins un monomère acrylique de formule : 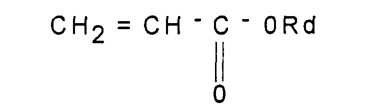 ou d'au moins un monomère méthacrylique de formule 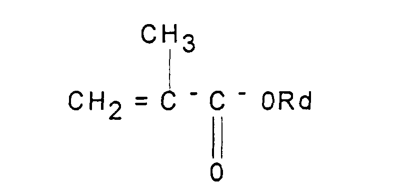 dans lesquelles Rd est choisi parmi les radicaux alkyle en C₁-C₁₈, linéaires ou ramifiés, primaires, secondaires ou tertiaires, cycloalkyle en C₅-C₁₈, (alcoxy en C₁-C₁₈)-alkyle en C₁-C₁₈, (alkylthio en C₁-C₁₈)-alkyle en C₁-C₁₈, aryle et arylalkyle, ces radicaux étant éventuellement substitués par au moins un atome d'halogène et/ou au moins un groupe hydroxyle après protection de ce groupe hydroxyle, les groupes alkyle ci-dessus étant linéaires ou ramifiés. Le monomère (méth)acrylique peut également être choisi parmi les (méth)acrylates de glycidyle, de norbornyle, d'isobornyle, les mono- et di-(alkyl en C₁-C₁₈)-(méth)acrylamides.

Comme exemples de méthacrylates utiles, on peut citer les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle, de n-hexyle, de 2-éthylhexyle, de cyclohexyle, d'octyle, d'i-octyle, de nonyle, de décyle, de lauryle, de stéaryle, de phényle, de benzyle, de β-hydroxy-éthyle, d'isobornyle, d'hydroxypropyle, d'hydroxybutyle. Le monomère méthacrylique préféré est le méthacrylate de méthyle.

Comme exemples d'acrylates de la formule ci-dessus, on peut citer les acrylates de méthyle, d'éthyle, de n-propyle, d'isopropyle, de n-butyle, de sec.-butyle, de tert.-butyle, d'hexyle, de 2-éthylhexyle, d'isooctyle, de 3,3,5-triméthylhexyle, de nonyle, d'isodécyle, de lauryle, d'octadécyle, de cyclohexyle, de phényle, de méthoxyméthyle, de méthoxyéthyle, d'éthoxyméthyle et d'éthoxyéthyle.

Bien entendu, l'invention concerne également les mélanges de polymères comme les mélanges des polymères ci-dessus mentionnés. Ainsi, l'invention concerne également les compositions comprenant un polymère vinylaromatique et un caoutchouc tel qu'un polydiène. L'invention concerne donc le polystyrène choc, lequel comprend habituellement une matrice de polystyrène et des nodules de caoutchouc, ces derniers comprenant habituellement du polybutadiène. Dans une telle composition, le radical libre stable joue le rôle de stabilisant, agissant à la fois contre la dépolymérisation de la phase polystyrène et contre la réticulation de la phase polybutadiène.

Dans un de ses aspects, l'invention concerne un procédé d'élaboration d'une composition ou d'un matériau comprenant un polymère préparé par une étape de polymérisation ou copolymérisation, ledit procédé comprenant une étape de chauffage en l'absence d'oxygène et éventuellement en l'absence de lumière. Ce procédé, qui peut être une utilisation au sens de la présente invention, est caractérisé en ce qu'un radical libre stable est introduit de façon à ce qu'il soit présent en mélange avec le polymère au plus tard pendant l'étape de chauffage. L'étape de chauffage peut être réalisée à toute température à laquelle on souhaite stabiliser le polymère. L'invention concerne tout particulièrement les procédés dont l'étape de chauffage est réalisée entre 180 et 300° C, voire entre 200 et 300° C, voire entre 220 et 300°C.

L'invention peut présenter un intérêt lorsque en fin d'élaboration d'une composition comprenant un polymère, on est amené à faire subir à ladite composition, une dévolatilisation à chaud et sous vide de façon à éliminer les espèces volatiles telles que l'éventuel solvant utilisé lors de la polymérisation ou copolymérisation et les éventuels monomères n'ayant pas réagit pendant la polymérisation ou copolymérisation. Cette étape de dévolatililisation est utilisée dans les procédés de fabrication industrielle des compositions comprenant au moins un monomère vinylaromatique, tel que le polystyrène cristal ou le polystyrène choc. Pour ces polymères, cette étape est généralement réalisée entre 180 et 300° C.

Le radical libre stable peut être introduit dans le milieu de polymérisation ou copolymérisation avant ou pendant la polymérisation ou copolymérisation devant mener au polymère.

En effet, en introduisant le radical libre stable de cette façon, le radical libre stable est présent en mélange avec le polymère ou copolymère et est donc présent pendant l'étape de chauffage que doit subir la composition comprenant le polymère après sa synthèse.

Si l'on souhaite éviter une éventuelle perturbation que peut provoquer le radical libre stable sur la polymérisation ou copolymérisation, on peut introduire le radical libre stable après la polymérisation ou copolymérisation et avant ou au plus tard pendant l'étape de chauffage.

Le radical libre stable peut être introduit dans le milieu comprenant le polymère à stabiliser à une température à laquelle le milieu est exempt de radicaux.

L'invention présente également un intérêt lorsque l'on souhaite transformer une composition comprenant un polymère dans le cadre de l'élaboration d'un matériau. La transformation envisagée peut-être une extrusion, une injection, un moulage, un soufflage (fabrication de film). Ces opérations sont généralement réalisées à une température supérieure à la température de fusion du polymère, et généralement en l'absence d'oxygène.

Dans le cas des polymères évoqués dans le tableau 1, cette transformation est généralement réalisée entre 180 et 300° C, sauf pour les polydiènes que l'on préfère transformer entre 80 et 150° C.

Dans un autre de ses aspects, l'invention présente également un intérêt lorsque l'on souhaite greffer lors d'une étape de chauffage une espèce sur un polymère. En effet, les réactions de greffage sur un polymère nécessitent généralement le chauffage de ce polymère dont les chaînes peuvent se réticuler ou se dépolymériser sous l'action de la chaleur.

La présence d'un radical libre stable pendant cette étape de chauffage stabilise les chaînes de polymère tout en permettant au greffage de se réaliser. La présence du radical libre stable permet de plus de réaliser des greffons présentant des longueurs plus uniformes. La réaction de greffage sur le polymère en présence du radical libre stable peut être réalisée dans les conditions habituelles de greffage d'une espèce sur un polymère sauf que l'on ajoute le radical libre stable au plus tard pendant le greffage. L'invention concerne donc également l'utilisation d'un radical libre stable intervenant lors d'un procédé de greffage d'une espèce sur un polymère comprenant une étape de réalisation d'un mélange d'un radical libre stable, du polymère et de l'espèce à greffer. Ce procédé de greffage est une utilisation au sens de la présente invention. Il n'est pas nécessaire qu'avant mélange, le polymère comprenne des groupements alkoxyamine. On peut ajouter au mélange un initiateur de radicaux libres. Celui-ci peut être choisi parmi les peroxydes et hydroperoxydes organiques comme le peroxyde de dibenzoyle, le peroxybenzoate de tert-butyle, le 1,1-bis-(tertbutylperoxy)cyclohexane ou les composés azoïques tel que l'azobisisobutyronitrile. L'initiateur de radicaux libres peut être présent dans le milieu de greffage à raison de 1 000 à 10 000 ppm par rapport à la somme de la masse d'espèce à greffer, de la masse d'initiateur de radicaux libres et de la masse de polymère. La présence d'un initiateur de radicaux libres est préférée mais n'est pas indispensable. Le mélange est généralement chauffé entre 80 et 200°C. Le mélange peut être exempt de solvant.

L'invention permet de réaliser des réactions de greffage sur polymère en l'absence de solvant et au cours même d'une étape de transformation de ce polymère tout en évitant une dégradation du polymère au niveau de ses chaînes principales.

Tous les polymères envisagés dans le tableau 1 peuvent être concernés par des réactions de greffage. Les espèces à utiliser pour un greffage sur un polymère peuvent être choisies parmi les composés comprenant au moins une double liaison carbone-carbone. Ces composés peuvent de plus comprendre un groupement carbonyle

〉C = O

et/ou hydroxyle -OH, et/ou époxy, et/ou amino et/ou alcoxysilyl.

Il peut donc s'agir d'un monomère vinylaromatique tel que déjà défini, un monomère (meth)acrylique tel que déjà défini, l'acrylonitrile, un ester vinylique tel que l'acétate de vinyle ou le propionate de vinyle, l'anhydride maléique, un monomère maléimide non substitué ou un monomère maléimide N-substitué de formule 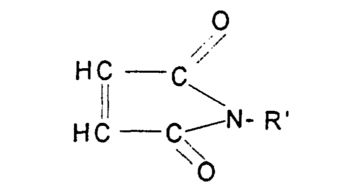 dans laquelle R' est un radical alkyle, arylalkyle, aryle ou alkylaryle ayant de 1 à 12 atomes de carbone comme le N-éthyl-maléimide, le N-isopropylmaléimide, le N-n-butylmaléimide, le N-isobutylmaléimide, le N-tert.-butylmaléimide, le N-n-octylmaléimide, le N-cyclohexylmaléimide, le N-benzylmaléimide et le N-phénylmaléimide, le N-cyclohexylmaléimide.

Les espèces à utiliser pour un greffage sur un polymère peuvent également être choisies parmi les mercaptans et disulfures, tels que les acides thiocarboxyliques comme l'acide mercaptoacétique (HOOC-CH₂-SH), l'acide mercatopropionique (HOOC-CH₂-CH₂-SH), l'acide dithiodipropionique (HOOC-CH₂CH₂-S-S-CH₂CH₂-COOH).

Il ne faut pas confondre un radical libre stable avec les radicaux libres dont la durée de vie est éphémère (quelques millisecondes) comme les radicaux libres issus des amorceurs habituels de polymérisation comme les peroxydes, hydroperoxydes et amorceurs de type azo. Les radicaux libres amorceurs de polymérisation tendent à accélérer la polymérisation. Au contraire, les radicaux libres stables tendent généralement à ralentir la polymérisation. On peut généralement dire qu'un radical libre est stable au sens de la présente invention s'il n'est pas amorceur de polymérisation et si, dans les conditions d'utilisation de la présente invention, la durée moyenne de vie du radical est d'au moins cinq minutes. Au cours de cette durée moyenne de vie, les molécules du radical libre stable alternent en permanence l'état de radical et l'état de groupement lié par une liaison covalente à une chaîne de polymère. Bien entendu, il est préférable que le radical libre stable présente une bonne stabilité pendant toute la durée de son utilisation dans le cadre de la présente invention. Généralement, un radical libre stable peut être isolé à l'état de radical à la température ambiante.

La famille des radicaux libres stables inclut les composés agissant comme inhibiteurs de polymérisation radicalaire, les radicaux nitroxydes stables c'est-à-dire comprenant le groupement =N-O° tels que les radicaux représentés par les formules suivantes: 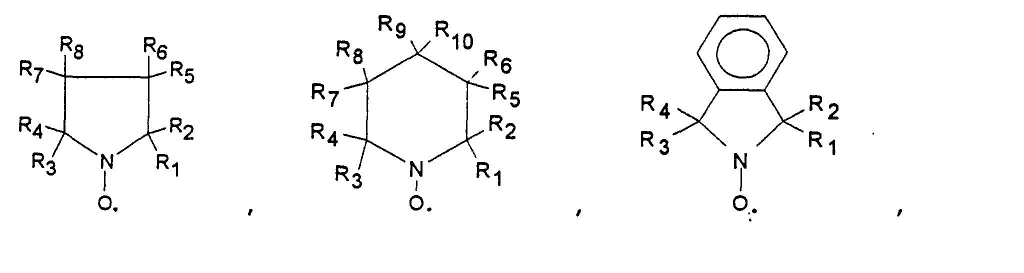 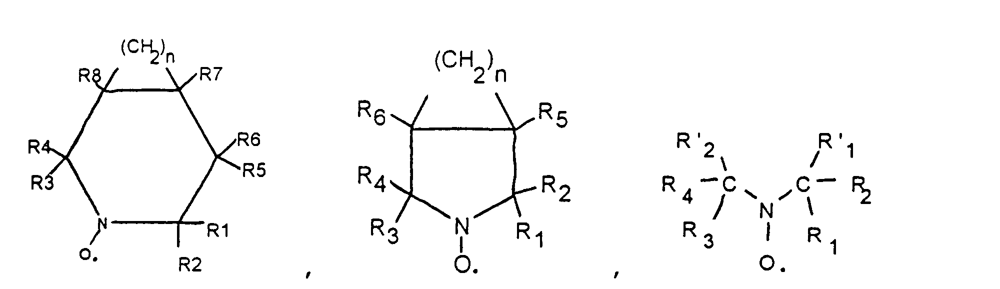 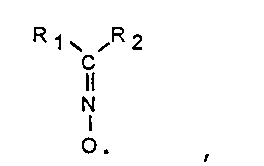 dans lesquelles R1, R2, R3, R4, R'1 et R'2 pouvant être identiques ou différents représentent un atome d'halogène tel que le chlore, le brome ou l'iode, un groupement hydrocarboné linéaire, ramifié ou cyclique, saturé ou insaturé tels qu'un radical alkyle ou phényle, ou un groupement ester -COOR ou un groupement alcoxyle -OR, ou un groupement phosphonate -PO(OR)₂, ou une chaîne de polymère pouvant par exemple être une chaîne de polyméthacrylate de méthyle, de polybutadiène, de polyoléfine comme de polyéthylène ou de polypropylène, mais étant de préférence une chaîne de polystyrène, et dans lesquelles R5, R6, R7, R8, R9 et R10, pouvant être identiques ou différent, peuvent être choisis dans la même famille de groupement que celle qui vient d'être envisagée pour R1, R2, R3, R4, R'1 et R'2, et de plus peuvent représenter un atome d'hydrogène, un groupement hydroxyde-OH, un groupement acide tel que -COOH ou -PO(OH)₂ ou -SO₃H. Le radical libre stable peut ne pas comprendre d'insaturation telle qu'une double liaison carbone-carbone car il n'est pas nécessaire qu'il se fixe à une espèce du milieu par l'intermédiaire d'une telle insaturation.

En particulier, le radical libre stable peut être le 2,2,5,5-tétraméthyl-1-pyrrolidyloxy commercialisé sous la marque PROXYL ou le 2,2,6,6-tétraméthyl-1-piperidinyloxy, généralement commercialisé sous la dénomination TEMPO.

Le radical libre stable est de préférence présent dans le milieu comprenant le polymère à stabiliser à raison de 0,05 à 0,5 % en poids par rapport à la somme de la masse de polymère à stabiliser et de la masse de radical libre stable.

### Exemple 1 (comparatif)

Dans une cuve de malaxage de 120 cm³, équipée d'un rotor cylindrique de volume 51 cm³, lequel tourne à 20 révolutions par minute, ladite cuve étant de marque Rhéomix 600 et commercialisée par la société Haake, on introduit après avoir porté la cuve à 250° C sous atmosphère d'azote, 50 g de polystyrène cristal de marque Lacqrene 1340 commercialisé par la Société Elf Atochem S.A. sous forme de granulés lesquels contiennent 160 ppm de styrène. Le polymère fond puis prend lui-même la température de 250° C en deux minutes. L'instant suivant les deux minutes est défini comme l'instant de départ de l'essai (temps zéro).

Ensuite, des prélèvements réguliers du polymère fondu sont réalisés pour analyse de la teneur en styrène du polymère. Chaque échantillon prélevé est rapidement refroidi en dessous de la température de ramollissement (environ 100° C), puis, après retour à la température ambiante, le styrène est dosé par chromatographie en phase gazeuse. Pour ce faire, l'échantillon est tout d'abord solubilisé dans le dichlorométhane, puis le polymère est précipité par le méthanol et le styrène restant en solution dans le dichlorométhane est dosé par chromatographie en phase gazeuse en utilisant comme étalon interne le propylbenzène. L'évolution au cours du temps de la teneur en styrène en raison de la dépolymérisation du polystyrène est indiquée dans le tableau 2.

### Exemple 2

On procède comme pour l'exemple 1 sauf qu'au "temps zéro", on introduit 0,05 g de 2,2,6,6-tétraméthyl-1-piperidinyloxy (TEMPO), soit environ 0,1 % de TEMPO par rapport à la masse polystyrène + TEMPO.

Les résultats sont rassemblés dans le tableau 2.

### Exemple 3

On procède comme pour l'exemple 1 sauf qu'au "temps zéro", on introduit 0,15 g de 2,2,6,6-tétraméthyl-1-piperidinyloxy (TEMPO), soit environ 0,3 % de TEMPO par rapport à la masse polystyrène + TEMPO. Les résultats sont rassemblés dans le tableau 2.

### Exempte 4 (comparatif)

On procède comme pour l'exemple 1 sauf que l'on engage 50 g de polyméthacrylate de méthyle de marque ALTUGLAS, qualité 2773, contenant 2100 ppm de méthacrylate de méthyle (MAM), et sauf que l'on procède ainsi pour le dosage du MAM : chaque échantillon est solubilisé dans l'acétone puis la solution ainsi obtenue est analysée par chromatographie en phase gazeuse.

L'évolution de la teneur en MAM en fonction du temps se trouve dans le tableau 3.

### Exemple 5

On procède comme pour l'exemple 4 sauf qu'au "temps zéro", on introduit 0,15 g de TEMPO Les résultats sont rassemblés dans le tableau 3.

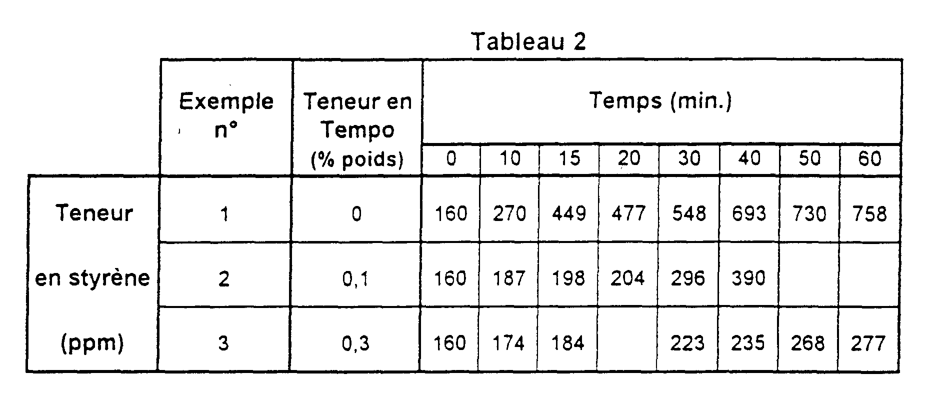

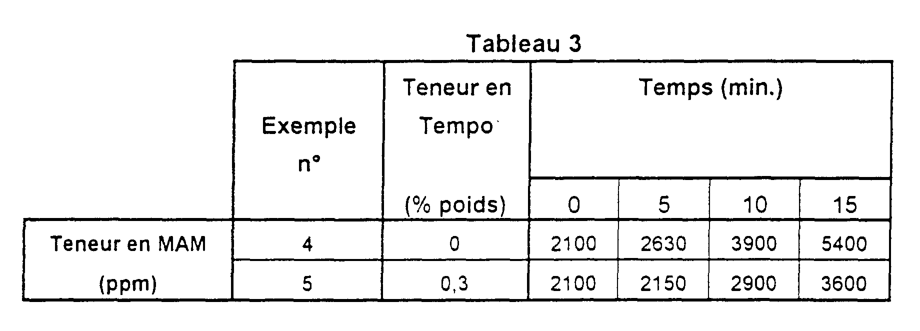

### Exemple 6 (comparatif)

Dans un réacteur de 3 litres équipé d'un agitateur ruban et d'une régulation de température, on introduit sous atmosphère d'azote à 20° C, 281 g d'un copolymère dibloc styrène-butadiène (de marque Europrène 1205) contenant 25 % en poids d'unités issus du styrène et présentant une masse moléculaire moyenne en poids de 147 000, sous la forme d'une solution contenant 1125 g d'éthylbenzène, puis 17,9 g d'acide mercaptopropionique. L'ensemble est porté à 92° C sous agitation de 200 révolutions par minutes et sous une pression de 2.10⁵ Pa (2 bars) d'azote. On ajoute alors 6 g d'une solution de peroxyde de benzoyle à 10 % en poids dans le toluène et 3 g de cette même solution une heure plus tard. Le réacteur est maintenu sous agitation à cette température encore 3 heures, puis il est refroidi et l'on récupère un copolymère porteur de greffons de l'acide mercaptopropionique (2,8 % en poids de greffons, mesuré par infra-rouge) par évaporation à 100° C sous vide. Ce copolymère apparait réticulé car il est insoluble dans le toluène et le cyclohexane.

### Exemple 7

Un procédé comme pour l'exemple 6, sauf que l'on ajoute 0,44 g de TEMPO dans le réacteur avant de chauffer celui-ci, et sauf que la température est de 125° C. Le copolymère récupéré contient 2,4 % en poids de greffons dérivés de l'acide mercaptopropionique. Il est parfaitement soluble dans le toluène, ce qui indique que le polymère s'est très peu dégradé par réticulation bien que la température ait été supérieure à celle de l'exemple 6.

### Exemple 8

Un procédé comme pour l'exemple 7 sauf que l'on remplace les 17,9 g d'acide mercaptopropionique par 17,9 g d'acide méthacrylique. Le copolymère final contient 0,7 % en poids de greffons et est soluble dans le toluène.

### Exemple 9

Dans la cuve de malaxage décrite à l'exemple 1, inertée à l'azote et chauffée à 150° C, on introduit 50 g d'un copolymère dibloc styrène-butadiène (Europrène 1205). La vitesse de malaxage est de 32 révolutions par minute et sera maintenue à cette valeur durant le greffage. On introduit alors une préparation contenant 0,07 g de TEMPO, 1,5 g d'acide mercaptopropionique et 0,16 g de peroxyde de benzoyle. L'ensemble est maintenu à 150° C sous agitation pendant 30 minutes puis refroidit.

On a ainsi obtenu un polymère contenant 0,45 % en poids de greffons et parfaitement soluble dans l'éthylbenzène, le toluène, l'hexane.

## Revendications

1. Utilisation d'un radical libre stable introduit à l'état de radical libre stable dans un polymère pour inhiber la dégradation dudit polymère par un mécanisme de dépolymérisation ou de réticulation, ledit mécanisme ne faisant pas intervenir l'oxygène.

2. Utilisation selon la revendication 1 **caractérisée en ce qu'**elle est réalisée en l'absence d'oxygène.

3. Utilisation selon la revendication 1 ou 2 **caractérisée en ce qu'**elle est réalisée en l'absence de lumière.

4. Utilisation selon l'une des revendications 1 à 3 **caractérisée en ce que** le mécanisme est une dépolymérisation.

5. Utilisation selon la revendication 1 à 3 **caractérisée en ce que** le mécanisme est une réticulation.

6. Utilisation selon l'une des revendications 1 à 3 et 5 **caractérisée en ce que** le polymère est choisi parmi les polydiènes.

7. Utilisation selon la revendication 6 **caractérisée en ce que** le polymère est un polybutadiène.

8. Utilisation selon la revendication 6 ou 7 **caractérisée en ce qu'**elle est réalisée entre 80 et 150°C.

9. Utilisation selon l'une des revendications 1 à 8 **caractérisée en ce que** le milieu comprenant le radical libre stable ne comprend pas de polymère comprenant une double liaison carbone-carbone.

10. Utilisation selon l'une des revendications 1 à 4 et 9 **caractérisée en ce que** le polymère est choisi parmi les vinylaromatiques.

11. Utilisation selon l'une des revendications 1 à 4 et 9 **caractérisée en ce que** le polymère est choisi parmi les oléfiniques.

12. Utilisation selon la revendication 10 ou 11 **caractérisée en ce qu'**elle est réalisée entre 180 et 300°C.

13. Utilisation selon la revendication 11 ou 12 **caractérisée en ce que** le polymère est un polymère du propylène.

14. Utilisation selon l'une des revendications 1 à 4 et 9 **caractérisée en ce que** le polymère est choisi parmi les acryliques ou méthacryliques.

15. Utilisation selon la revendication 14 **caractérisée en ce qu'**elle est réalisée entre 160 et 300°C.

16. Utilisation selon l'une des revendications 1 à 15 **caractérisée en ce que** le milieu comprenant le radical libre stable ne comprend pas de polyphénylène éther.

17. Utilisation selon l'une des revendications précédentes **caractérisée en ce que** le radical libre stable comprend un groupement = N - O°.

18. Utilisation selon l'une des revendications précédentes **caractérisée en ce que** le radical libre stable ne comprend pas de double liaison carbone-carbone.

19. Utilisation selon la revendication précédente **caractérisée en ce que** le radical libre stable ne comprend pas d'insaturation par laquelle il pourrait se greffer sur une espèce du milieu.

20. Utilisation selon l'une des revendications précédentes **caractérisée en ce que** le radical libre stable est présent à raison de 0,05 à 0,5 % en poids par rapport à la somme de la masse de polymère à stabiliser et de la masse de radical libre stable.

21. Utilisation selon l'une des revendications précédentes **caractérisée en ce qu'**elle a lieu à une pression inférieure à 1.10⁷ Pa (100 bars).

22. Utilisation selon l'une des revendications précédentes **caractérisée en ce que** le radical libre stable est introduit après la polymérisation ou copolymérisation du polymère.

23. Utilisation selon l'une des revendications précédentes **caractérisée en ce qu'**elle est une transformation du polymère comme une extrusion, injection, moulage ou soufflage, réalisée à une température supérieure à la température de fusion du polymère.

24. Utilisation selon l'une des revendications précédentes **caractérisée en ce que** le milieu comprenant le radical libre stable ne comprend pas de co-stabilisant.

25. Utilisation selon l'une des revendications 1 à 5, **caractérisée en ce qu'**elle intervient lors d'un procédé de greffage d'une espèce sur le polymère comprenant une étape de réalisation d'un mélange du radical libre stable, du polymère et de l'espèce à greffer, en l'absence d'initiateur de radicaux libres, ou en présence d'un initiateur de radicaux libres, les quantités de radical libre stable et d'initiateur étant, dans le cas de la présence d'un initiateur de radicaux libres, respectivement de 0,05 à 0,5 % en poids par rapport à la somme de la masse de polymère et de la masse de radical libre stable, et de 1000 à 10 000 ppm par rapport à la somme de la masse d'espèce à greffer, de la masse d'initiateur de radicaux libres et de la masse de polymère.

26. Utilisation selon la revendication 25 **caractérisée en ce que** le polymère ne comprend pas de groupement alkoxyamine.

27. Utilisation selon la revendication 25 ou 26 **caractérisée en ce que** le mélange est chauffé entre 80 et 200°C.

28. Utilisation selon l'une des revendications 25 à 27 **caractérisée en ce que** le mélange est exempt de solvant.

29. Utilisation selon l'une des revendications 25 à 28, **caractérisée en ce que** le mélange ne comprend pas de co-stabilisant.

30. Utilisation selon l'une des revendications 25 à 29, **caractérisée en ce que** le mélange ne comprend pas d'initiateur de radicaux libres et **en ce que** le radical libre stable est présent à raison de 0,05 à 0,5 % en poids par rapport à la somme de la masse de polymère et de la masse de radical libre stable.

31. Procédé d'élaboration d'une composition ou d'un matériau ou d'une pièce comprenant un polymère préparé par une étape de polymérisation, ledit procédé comprenant une étape de chauffage entre 180 et 300°C en l'absence d'oxygène, **caractérisé en ce qu'**un radical libre stable est introduit à l'état de radical libre stable et de façon à ce qu'il soit présent en mélange avec le polymère, au plus tard pendant l'étape de chauffage.

32. Procédé selon la revendication précédente **caractérisé en ce que** l'étape de chauffage est réalisée en l'absence de lumière.

33. Procédé selon la revendication 31 ou 32 **caractérisé en ce que** le milieu comprenant le radical libre stable pendant l'étape de chauffage ne comprend pas de polymère comprenant une double liaison carbone-carbone.

34. Procédé selon l'une des revendications 31 à 33 **caractérisé en ce que** le milieu comprenant le radical libre stable pendant l'étape de chauffage ne comprend pas de polyphénylène éther.

35. Procédé selon l'une des revendications 31 à 34 **caractérisé en ce que** le polymère est choisi parmi les vinylaromatiques.

36. Procédé selon l'une des revendications 31 à 35 **caractérisé en ce que** le polymère est choisi parmi les oléfiniques.

37. Procédé selon l'une des revendications 31 à 36 **caractérisé en ce que** le polymère est choisi parmi les acryliques ou méthacryliques.

38. Procédé selon l'une des revendications 31 à 37 **caractérisé en ce que** le radical libre stable est ajouté après la préparation par polymérisation du polymère.

39. Procédé selon l'une des revendications 31 à 38 **caractérisé en ce que** l'étape de chauffage est réalisée entre 200 et 300°C.

40. Procédé selon la revendication précédente **caractérisé en ce que** l'étape de chauffage est réalisée entre 220 et 300°C.

41. Procédé selon l'une des revendications 31 à 40 **caractérisé en ce que** l'étape de chauffage est réalisée à une pression inférieure à 1.10⁷ Pa (100 bars).

42. Procédé selon l'une des revendications 31 à 41 **caractérisé en ce qu'**elle est une transformation du polymère comme une extrusion, injection, moulage ou soufflage, réalisée à une température supérieure à la température de fusion du polymère.

43. Procédé selon l'une des revendications 31 à 42 **caractérisé en ce que** le milieu comprenant le radical libre stable ne comprend pas de co-stabilisant.

44. Procédé selon l'une des revendications 31 à 44 **caractérisé en ce que** le radical libre stable comprend un groupement =N-O°.

45. Procédé selon l'une des revendications 31 à 44 **caractérisé en ce que** le radical libre stable est présent à raison de 0,05 à 0,5 % en poids par rapport à la somme de la masse de polymère à stabiliser et de la masse de radical libre stable.

## Patentansprüche

1. Verwendung eines stabilen freien Radikals, das in Form eines stabilen freien Radikals einem Polymeren zugegeben wurde, um den Abbau des genannten Polymeren durch einen Depolymerisations- oder Vernetzungsvorgang zu hemmen, wobei bei dem genannten Vorgang kein Sauerstoff eingesetzt wird.

2. Verwendung nach Anspruch 1, **dadurch gekennzeichnet, daß** sie in Abwesenheit von Sauerstoff erfolgt.

3. Verwendung nach Anspruch 1 oder 2, **dadurch gekennzeichnet, daß** sie unter Lichtausschluß erfolgt.

4. Verwendung nach einem der Ansprüche 1 bis 3, **dadurch gekennzeichnet, daß** der Vorgang eine Depolymerisation ist.

5. Verwendung nach einem der Ansprüche 1 bis 3, **dadurch gekennzeichnet, daß** der Vorgang eine Vernetzung ist.

6. Verwendung nach einem der Ansprüche 1 bis 3 und 5, **dadurch gekennzeichnet, daß** das Polymere aus den Polydienen gewählt ist.

7. Verwendung nach Anspruch 6, **dadurch gekennzeichnet, daß** das Polymere Polybutadien ist.

8. Verwendung nach Anspruch 6 oder 7, **dadurch gekennzeichnet, daß** sie zwischen 80 und 150 °C erfolgt.

9. Verwendung nach einem der Ansprüche 1 bis 8, **dadurch gekennzeichnet, daß** das das stabile freie Radikal enthaltende Milieu kein Polymeres mit einer Kohlenstoff-Kohlenstoff-Doppelbindung enthält.

10. Verwendung nach einem der Ansprüche 1 bis 4 und 9, **dadurch gekennzeichnet, daß** das Polymere aus den vinylaromatischen Verbindungen gewählt ist.

11. Verwendung nach einem der Ansprüche 1 bis 4 und 9, **dadurch gekennzeichnet, daß** das Polymere aus den Olefinverbindungen gewählt ist.

12. Verwendung nach Anspruch 10 oder 11, **dadurch gekennzeichnet, daß** sie zwischen 180 und 300 °C erfolgt.

13. Verwendung nach Anspruch 11 oder 12, **dadurch gekennzeichnet, daß** das Polymere ein Propylenpolymeres ist.

14. Verwendung nach einem der Ansprüche 1 bis 4 und 9, **dadurch gekennzeichnet, daß** das Polymere aus den Acryl- oder Methacrylverbindungen gewählt ist.

15. Verwendung nach Anspruch 14, **dadurch gekennzeichnet, daß** sie zwischen 160 und 300 °C erfolgt.

16. Verwendung nach einem der Ansprüche 1 bis 15, **dadurch gekennzeichnet, daß** das das stabile freie Radikal enthaltende Milieu keinen Polyphenylenether enthält.

17. Verwendung nach einem der vorangehenden Ansprüche, **dadurch gekennzeichnet, daß** das stabile freie Radikal eine =N-O°-Gruppe enthält.

18. Verwendung nach einem der vorangehenden Ansprüche, **dadurch gekennzeichnet, daß** das stabile freie Radikal keine Kohlenstoff-Kohlenstoff-Doppelbindung enthält.

19. Verwendung nach dem vorangehenden Anspruch, **dadurch gekennzeichnet, daß** das stabile freie Radikal keine ungesättigte Gruppierung enthält, durch die sie sich auf eine Spezies des Milieus aufpfropfen könnte.

20. Verwendung nach einem der vorangehenden Ansprüche, **dadurch gekennzeichnet, daß** das stabile freie Radikal in einer Menge von 0,05 bis 0,5 Gew.-% bezogen auf die Summe der Masse des zu stabilisierenden Polymeren und der Masse des stabilen freien Radikals vorliegt.

21. Verwendung nach einem der vorangehenden Ansprüche, **dadurch gekennzeichnet, daß** sie bei einem Druck unter 1·10⁷ Pa (100 bar) stattfindet.

22. Verwendung nach einem der vorangehenden Ansprüche, **dadurch gekennzeichnet, daß** das stabile freie Radikal nach der Polymerisation oder Copolymerisation des Polymeren zugegeben wird.

23. Verwendung nach einem der vorangehenden Ansprüche, **dadurch gekennzeichnet, daß** sie eine Umformung des Polymeren wie eine Extrusion, eine Einspritzung, Gießen oder Blasen ist, die bei einer Temperatur über der Schmelztemperatur des Polymeren erfolgt.

24. Verwendung nach einem der vorangehenden Ansprüche, **dadurch gekennzeichnet, daß** das das stabile freie Radikal enthaltende Milieu keinen Co-Stabilisator enthält.

25. Verwendung nach einem der Ansprüche 1 bis 5, **dadurch gekennzeichnet, daß** sie bei einem Verfahren zur Aufpfropfung einer Spezies auf ein Polymeres vorkommt, das einen Schritt der Herstellung eines Gemisches aus dem stabilen freien Radikal, dem Monomeren und der aufzupfropfenden Spezies in Abwesenheit eines Freie-Radikale-Bildners oder in Gegenwart eines Freie-Radikale-Inhibitors umfaßt, wobei die Mengen an stabilem freiem Radikal und Bildner im Fall der Gegenwart eines Freie-Radikale-Bildners jeweils 0,05 bis 0,5 Gew.-% bezogen auf die Summe der Masse des Polymeren und der Masse des stabilen freien Radikals und 1.000 bis 10.000 ppm bezogen auf die Summe der Masse der aufzupfropfenden Spezies, der Masse des Freie-Radikale-Bildners und der Masse des Polymeren betragen.

26. Verwendung nach Anspruch 25, **dadurch gekennzeichnet, daß** das Polymere keine Alkoxyamingruppe enthält.

27. Verwendung nach Anspruch 25 oder 26, **dadurch gekennzeichnet, daß** das Gemisch auf eine Temperatur zwischen 80 und 200 °C erhitzt wird.

28. Verwendung nach einem der Ansprüche 25 bis 27, **dadurch gekennzeichnet, daß** das Gemisch frei von einem Lösungsmittel ist.

29. Verwendung nach einem der Ansprüche 25 bis 28, **dadurch gekennzeichnet, daß** das Gemisch keinen Co-Stabilisator enthält.

30. Verwendung nach einem der Ansprüche 25 bis 29, **dadurch gekennzeichnet, daß** das Gemisch keinen Freie-Radikale-Bildner enthält und daß das stabile freie Radikal in einer Menge von 0,05 bis 0,5 Gew.-%, bezogen auf die Summe der Masse des Polymeren und der Masse des stabilen freien Radikals, vorliegt.

31. Verfahren zur Herstellung einer Zusammensetzung oder eines Materials oder eines Erzeugnisses, das ein durch einen Polymerisationsschritt hergestelltes Polymeres enthält, wobei das genannte Verfahren einen Schritt der Erwärmung auf eine Temperatur zwischen 180 und 300 °C in Abwesenheit von Sauerstoff umfaßt, **dadurch gekennzeichnet, daß** ein stabiles freies Radikal in Form eines stabilen freien Radikals zugegeben wird, so daß ein Gemisch mit einem Polymeren spätestens während des Erwärmungsschritts vorliegt.

32. Verfahren nach dem vorangehenden Anspruch, **dadurch gekennzeichnet, daß** der Erwärmungsschritt unter Lichtausschluß erfolgt.

33. Verfahren nach Anspruch 31 oder 32, **dadurch gekennzeichnet, daß** das Milieu, das das stabile freie Radikal während des Erwärmungsschritts enthält, kein Polymeres mit einer Kohlenstoff-Kohlenstoff-Doppelbindung enthält.

34. Verfahren nach einem der Ansprüche 31 bis 33, **dadurch gekennzeichnet, daß** das Milieu, das das stabile freie Radikal während des Erwärmungsschritts enthält, keinen Polyphenylenether enthält.

35. Verfahren nach einem der Ansprüche 31 bis 34, **dadurch gekennzeichnet, daß** das Polymere aus den vinylaromatischen Verbindungen gewählt ist.

36. Verfahren nach einem der Ansprüche 31 bis 35, **dadurch gekennzeichnet, daß** das Polymere aus den Olefinverbindungen gewählt ist.

37. Verfahren nach einem der Ansprüche 31 bis 36, **dadurch gekennzeichnet, daß** das Polymere aus den Acryl- oder Methacrylverbindungen gewählt ist.

38. Verfahren nach einem der Ansprüche 31 bis 37, **dadurch gekennzeichnet, daß** das stabile freie Radikal nach der Herstellung durch Polymerisation des Polymeren zugegeben wird.

39. Verfahren nach einem der Ansprüche 31 bis 38, **dadurch gekennzeichnet, daß** der Erwärmungsschritt zwischen 200 und 300 °C erfolgt.

40. Verfahren nach dem vorangehenden Anspruch, **dadurch gekennzeichnet, daß** der Erwärmungsschritt zwischen 220 und 300 °C erfolgt.

41. Verfahren nach einem der Ansprüche 31 bis 40, **dadurch gekennzeichnet, daß** der Erwärmungsschritt bei einem Druck unter 1·10⁷ Pa (100 bar) erfolgt.

42. Verfahren nach einem der Ansprüche 31 bis 41, **dadurch gekennzeichnet, daß** es eine Umformung des Polymeren wie eine Extrusion, eine Einspritzung, Gießen oder Blasen darstellt, die bei einer Temperatur über der Schmelztemperatur des Polymeren erfolgt.

43. Verfahren nach einem der Ansprüche 31 bis 42, **dadurch gekennzeichnet, daß** das das stabile freie Radikal enthaltende Milieu keinen Co-Stabilisator enthält.

44. Verfahren nach einem der Ansprüche 31 bis 43, **dadurch gekennzeichnet, daß** das stabile freie Radikal eine =N-O°-Gruppe enthält.

45. Verfahren nach einem der Ansprüche 31 bis 44, **dadurch gekennzeichnet, daß** das stabile freie Radikal in einer Menge von 0,05 bis 0,5 Gew.-% bezogen auf die Summe des zu stabilisierenden Polymeren und der Masse des stabilen freien Radikals vorliegt.

## Claims

1. Use of a stable free radical introduced in the stable free radical state into a polymer for inhibiting the degradation of the said polymer by a depolymerization or crosslinking mechanism, the said mechanism not involving oxygen.

2. Use according to Claim 1, **characterized in that** it is carried out in the absence of oxygen.

3. Use according to Claim 1 or 2, **characterized in that** it is carried out in the absence of light.

4. Use according to one of Claims 1 to 3, **characterized in that** the mechanism is a depolymerization.

5. Use according to one of Claims 1 to 3, **characterized in that** the mechanism is a crosslinking.

6. Use according to one of Claims 1 to 3 and 5, **characterized in that** the polymer is chosen from polydienes.

7. Use according to Claim 6, **characterized in that** the polymer is a polybutadiene.

8. Use according to Claim 6 or 7, **characterized in that** it is carried out between 80 and 150°C.

9. Use according to one of Claims 1 to 8, **characterized in that** the mixture comprising the stable free radical does not comprise a polymer comprising a carbon-carbon double bond.

10. Use according to one of Claims 1 to 4 and 9, **characterized in that** the polymer is chosen from vinylaromatic polymers.

11. Use according to one of Claims 1 to 4 and 9, **characterized in that** the polymer is chosen from olefinic polymers.

12. Use according to Claim 10 or 11, **characterized in that** it is carried out between 180 and 300°C.

13. Use according to Claim 11 or 12, **characterized in that** the polymer is a propylene polymer.

14. Use according to one of Claims 1 to 4 and 9, **characterized in that** the polymer is chosen from acrylic or methacrylic polymers.

15. Use according to Claim 14, **characterized in that** it is carried out between 160 and 300°C.

16. Use according to one of Claims 1 to 15, **characterized in that** the mixture comprising the stable free radical does not comprise a poly(phenylene ether).

17. Use according to one of the preceding claims, **characterized in that** the stable free radical comprises an =N-O' group.

18. Use according to one of the preceding claims, **characterized in that** the stable free radical does not comprise a carbon-carbon double bond.

19. Use according to the preceding claim, **characterized in that** the stable free radical does not comprise an unsaturation via which it could be grafted onto a species of the mixture.

20. Use according to one of the preceding claims, **characterized in that** the stable free radical is present in the proportion of 0.05 to 0.5% by weight with respect to the sum of the mass of polymer to be stabilized and of the mass of stable free radical.

21. Use according to one of the preceding claims, **characterized in that** it takes place at a pressure of less than 1 x 10⁷ Pa (100 bars).

22. Use according to one of the preceding claims, **characterized in that** the stable free radical is introduced after the polymerization or copolymerization of the polymer.

23. Use according to one of the preceding claims, **characterized in that** it is a conversion of the polymer, such as an extrusion, an injection, a moulding or a blowing, carried out at a temperature above the melting temperature of the polymer.

24. Use according to one of the preceding claims, **characterized in that** the mixture comprising the stable free radical does not comprise a costabilizer.

25. Use according to one of Claims 1 to 5, **characterized in that** it is involved during a process for grafting a species onto the polymer comprising a stage of preparing a mixture of the stable free radical, of the polymer and of the species to be grafted, in the absence of free radical initiator or in the presence of a free radical initiator, the amounts of stable free radical and of initiator being, in the case of the presence of a free radical initiator, respectively from 0.05 to 0.5% by weight with respect to the sum of the mass of polymer and of the mass of stable free radical and from 1 000 to 10 000 ppm with respect to the sum of the mass of species to be grafted, of the mass of free radical initiator and of the mass of polymer.

26. Use according to Claim 25, **characterized in that** the polymer does not comprise an alkoxyamine group.

27. Use according to Claim 25 or 26, **characterized in that** the mixture is heated between 80 and 200°C.

28. Use according to one of Claims 25 to 27, **characterized in that** the mixture is free from solvent.

29. Use according to one of Claims 25 to 28, **characterized in that** the mixture does not comprise a costabilizer.

30. Use according to one of Claims 25 to 29, **characterized in that** the mixture does not comprise a free radical initiator and **in that** the stable free radical is present in the proportion of 0.05 to 0.5% by weight with respect to the sum of the mass of polymer and of the mass of stable free radical.

31. Process for the development of a composition or of a material or of a component comprising a polymer prepared by a polymerization stage, the said process comprising a stage of heating between 180 and 300°C in the absence of oxygen, **characterized in that** a stable free radical is introduced in the stable free radical state and so that it is present as a mixture with the polymer at the latest during the heating stage.

32. Process according to the preceding claim, **characterized in that** the heating stage is carried out in the absence of light.

33. Process according to Claim 31 or 32, **characterized in that** the mixture comprising the stable free radical during the heating stage does not comprise a polymer comprising a carbon-carbon double bond.

34. Process according to one of Claims 31 to 33, **characterized in that** the mixture comprising the stable free radical during the heating stage does not comprise poly(phenylene ether).

35. Process according to one of Claims 31 to 34, **characterized in that** the polymer is chosen from vinylaromatic polymers.

36. Process according to one of Claims 31 to 35, **characterized in that** the polymer is chosen from olefinic polymers.

37. Process according to one of Claims 31 to 36, **characterized in that** the polymer is chosen from acrylic or methacrylic polymers.

38. Process according to one of Claims 31 to 37, **characterized in that** the stable free radical is added after the preparation by polymerization of the polymer.

39. Process according to one of Claims 31 to 38, **characterized in that** the heating stage is carried out between 200 and 300°C.

40. Process according to the preceding claim, **characterized in that** the heating stage is carried out between 220 and 300°C.

41. Process according to one of Claims 31 to 40, **characterized in that** the heating stage is carried out at a pressure of less than 1 x 10⁷ Pa (100 bars).

42. Process according to one of Claims 31 to 41, **characterized in that** it is a conversion of the polymer, such as an extrusion, an injection, a moulding or a blowing, carried out at a temperature above the melting temperature of the polymer.

43. Process according to one of Claims 31 to 42, **characterized in that** the mixture comprising the stable free radical does not comprise a costabilizer.

44. Process according to one of Claims 31 to 44, **characterized in that** the stable free radical comprises an =N-O° group.

45. Process according to one of Claims 31 to 44, **characterized in that** the stable free radical is present in the proportion of 0.05 to 0.5% by weight with respect to the sum of the mass of polymer to be stabilized and of the mass of stable free radical.
